# DEMANDE DE BREVET EUROPEEN

(11) **EP 2 574 018 A1**
(43) Date de publication de la demande: **27.03.2013**
(21) Numéro de dépôt: 11306185.7
(22) Date de dépôt: 21.09.2011
(51) Int. Cl.: H04M 1/2745, H04M 1/725, H04M 3/56, H04M 1/00, H04M 1/26, H04M 1/56, H04M 1/57

(54) **Terminal téléphonique permettant de contacter facilement un autre terminal situé à proximité**

(71) Demandeur: Alcatel Lucent, 75007 Paris (FR)
(72) Inventeur: Dantec, Fabrice, 29290 SAINT RENAN (FR); Elleouet, Jerome, 29228 BREST (FR)
(74) Mandataire: Sciaux, Edmond

(57) **Abrégé**

Ce terminal téléphonique (T2) comporte :
- des moyens (NW) pour créer un réseau local sans fil (BTN) entre terminaux homologues (T3, T4, T5, T6) situés à proximité,
- des moyens (NW, CI, GUI) pour recevoir des noms d'utilisateur transmis respectivement par les terminaux homologues associés à ce réseau local sans fil (BTN),
- des moyens (GUI) pour afficher les noms d'utilisateur transmis respectivement par les terminaux homologues associés à ce réseau local sans fil (BTN) entre terminaux homologues,
- des moyens (GUI) pour permettre à un utilisateur de sélectionner un nom parmi ceux affichés,
- des moyens (CI) pour permettre à un utilisateur de faire intervenir, dans une communication nouvelle ou déjà établie, le terminal correspondant au nom sélectionné.

## Description

L'invention concerne un terminal téléphonique permettant, par exemple, de faire intervenir facilement une troisième personne dans une communication téléphonique déjà établie entre deux personnes, lorsque cette troisième personne est à proximité de ce terminal ; ou d'établir facilement une communication téléphonique avec une autre personne lorsque le terminal de celle-ci est à proximité de ce terminal. Ce terminal peut être un téléphone fixe, un téléphone sans fil, un téléphone cellulaire, un smartphone, ou un ordinateur personnel exécutant un logiciel de téléphonie.

Dans un réseau téléphonique d'entreprise, il est fréquent qu'il soit nécessaire de faire intervenir une personne une communication déjà établie entre une première et un deuxième personne. Par exemple, la première personne a appelé la deuxième personne pour obtenir une information, mais la deuxième personne n'a pas cette information. Si l'appel est arrivé sur un terminal mobile, son utilisateur peut dans certains cas se déplacer jusqu'à une troisième personne pour lui demander la réponse, et il peut même lui mettre en main le terminal mobile pour répondre directement au demandeur. Mais cette solution n'est pas toujours possible, en particulier si l'utilisateur du terminal mobile ne veut pas se séparer son terminal. Il y a alors deux autres solutions possibles :
- Soit la deuxième personne sait qu'une troisième personne a cette information, et il peut alors transférer l'appel vers le terminal de la troisième personne, ou la mettre en conférence à trois.
- Soit une troisième personne souhaite s'introduire dans la communication parce que cette troisième personne est à proximité de la deuxième personne, a entendu la conversation entre la première et la deuxième personne, et souhaite intervenir dans cette conversation.

Les terminaux utilisés couramment dans les réseaux d'entreprise permettent, en collaboration avec un autocommutateur, de transférer un appel vers le terminal d'une troisième personne, ou le mettre en conférence à trois. Mais quand la deuxième personne veut commander un transfert ou une mise en conférence, elle doit connaître le nom de la troisième personne, c'est à dire un numéro de téléphone ou une adresse, selon le type de terminal à appeler. Le moyen le plus classique de trouver ce nom est de consulter un annuaire, mais c'est très long. Un autre moyen connu, et plus rapide, consiste à présenter à la deuxième personne, sur un écran, une liste de noms prédéterminés, qui est propre à la deuxième personne. Mais cela nécessite de créer cette liste au préalable, et il se présente toujours des cas où la troisième personne n'a pas été prévue dans la liste.

Le but de l'invention est de proposer une solution plus satisfaisante pour faire intervenir une troisième personne dans une communication téléphonique entre deux personnes.

L'objet de l'invention est un terminal comportant :
- des moyens pour s'associer à un réseau local sans fil entre terminaux homologues,
- des moyens pour recevoir des noms d'utilisateur et des numéros d'appel transmis respectivement par les terminaux homologues associés à ce réseau local sans fil entre terminaux homologues,
et qui est caractérisé en ce qu'il comporte en outre :
- des moyens pour permettre à un utilisateur de sélectionner un nom parmi ceux affichés,
- et des moyens pour permettre à un utilisateur de faire intervenir, dans une communication, le terminal correspondant au nom sélectionné.

Le terminal ainsi caractérisé permet de contacter facilement un autre terminal pour le faire intervenir dans une communication téléphonique déjà établie, ou pour établir avec lui une nouvelle communication, parce qu'il peut détecter automatiquement la présence d'autres terminaux homologues situés à proximité, obtenir automatiquement leurs numéros d'appel respectifs et les noms de leurs utilisateurs respectifs, puis afficher automatiquement ces noms, et proposer à l'utilisateur de sélectionner un nom puis une commande. L'utilisateur peut alors facilement faire intervenir cet autre terminal. Par exemple, il peut réaliser un transfert d'appel, ou une conférence à trois, ou une nouvelle communication, etc, sans avoir à consulter un annuaire, ni avoir à créer lui-même, à l'avance, une liste de destinataires potentiels pour disposer de son numéro d'appel.

La liste des noms proposés est limitée par le fait qu'un réseau entre terminaux homologues a généralement une courte portée. C'est un avantage : La zone de portée englobe généralement des employés d'un seul et même service car les employés d'un même service sont généralement groupés dans un même bureau ou un petit nombre de bureaux connexes. Ainsi les noms fournis correspondent seulement à des employés qui sont chacun susceptibles d'être sélectionnés comme le destinataire d'un transfert d'appel, ou comme le troisième participant à une conférence à trois, ou comme destinataire d'un nouvel appel destiné à continuer une conversation commencée de vive voix.

Dans des modes de réalisation préférés, le terminal selon l'invention peut comprendre une ou plusieurs des caractéristiques suivantes :
- Les moyens pour permettre à un utilisateur de faire intervenir, dans une communication, le terminal correspondant au nom sélectionné, comportent des moyens pour envoyer, à ce terminal correspondant au le nom sélectionné, des informations concernant une communication en cours entre ce terminal et un troisième terminal ; et pour autoriser l'utilisateur de ce terminal correspondant au nom sélectionné à intervenir dans cette communication, à son initiative.
- Les moyens pour permettre à un utilisateur de faire intervenir, dans une communication, le terminal correspondant au nom sélectionné comportent des moyens pour permettre à l'utilisateur de commander le transfert d'une communication téléphonique en cours vers ce terminal correspondant au nom sélectionné.
- Les moyens pour permettre à un utilisateur de faire intervenir, dans une communication, le terminal correspondant au nom sélectionné comportent des moyens pour permettre à l'utilisateur de commander l'établissement d'une conférence en rajoutant le terminal correspondant au nom sélectionné à une communication en cours entre le premier terminal et un troisième terminal.
- Les moyens pour permettre à un utilisateur de faire intervenir, dans une communication, le terminal correspondant au nom sélectionné comportent des moyens pour demander l'établissement d'une nouvelle communication avec le terminal correspondant au nom sélectionné.
- Le terminal comporte en outre des moyens pour envoyer à un autre terminal, un numéro permettant d'appeler ce premier terminal, et un nom d'utilisateur correspondant à ce premier terminal, lorsque ce premier terminal a été associé à un réseau local sans fil créé entre terminaux homologues et comportant cet autre terminal.

L'invention sera mieux comprise et d'autres caractéristiques apparaîtront à l'aide de la description ci-dessous et des figures l'accompagnant :
- La figure 1 illustre un premier exemple d'utilisation du terminal selon l'invention.
- La figure 2 représente le schéma synoptique d'un exemple de réalisation du terminal selon l'invention.

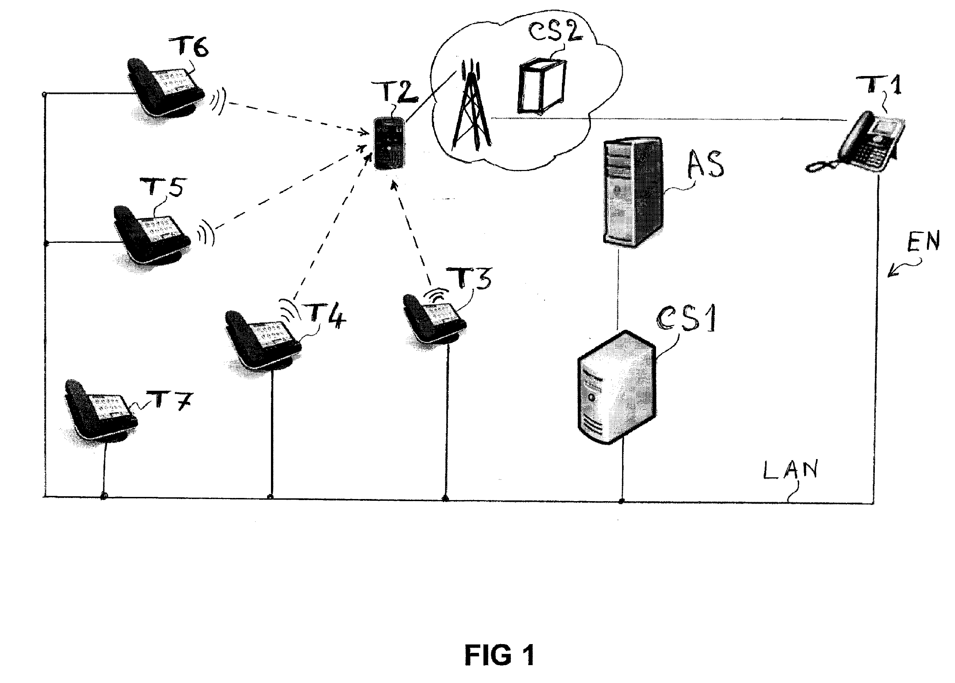

Dans l'exemple illustré par la figure 1, un réseau d'entreprise EN comporte :
- Des terminaux téléphoniques fixes T1, T3, T4, T5, T6, T7, etc, reliés à un réseau local LAN de type Ethernet. Ces terminaux utilisent le protocole Internet pour transporter des paquets de données représentant des signaux vocaux.
- Un serveur de communication CS1 relié au réseau local LAN.
- Un server d'applications AS commandant le serveur de communication CS1 pour fournir certains services, par exemple pour faire une conférence à trois.

Un employé de la même entreprise que les utilisateurs des terminaux T1, T3, T4, T5, T6, T7, utilise un terminal mobile T2 de type GSM quand il se déplace dans les locaux de l'entreprise, et à l'extérieur. Les terminaux T1 à T7 sont réalisés selon l'invention. En particulier, Ils sont chacun équipés d'un émetteur- récepteur Bluetooth qui est activé en permanence de façon à pouvoir créer automatiquement un réseau local sans fil entre homologues sitôt qu'au moins un autre terminal homologue est à proximité.

A l'instant considéré, l'utilisateur du terminal mobile T2 est dans un bureau de l'entreprise, à peu de distance des terminaux fixes T3, T4, T5, T6. Il détecte la présence de chacun des terminaux T3 à T6 situés à proximité de lui, grâce à leurs émetteurs-récepteurs Bluetooth respectifs qui sont activés. Il ne détecte pas les terminaux T1 et T7 qui sont trop éloignés. Selon l'invention, tous les terminaux qui peuvent entrer en contact par une liaison Bluetooth créent un réseau Bluetooth entre homologues, c'est-à-dire sans infrastructure fixe. Chaque terminal émet sur ce réseau un message Bluetooth qui contient son numéro de téléphone et le nom de l'utilisateur habituel de ce terminal. Ce message Bluetooth permet aux terminaux voisins d'identifier le terminal qui a émis le message, et son utilisateur habituel. Chaque terminal qui reçoit un tel message mémorise temporairement ce nom, et le numéro de téléphone associé.

A l'instant considéré, l'utilisateur du terminal T2 reçoit un appel provenant de l'utilisateur du terminal T1. Cet appel est acheminé par une liaison non représentée existant entre le réseau de l'entreprise et un réseau mobile PLMN qui comporte notamment une station de base BS et un serveur de communication CS2 qui prennent en charge cet appel.

L'utilisateur du terminal T2 répond à cet appel. Le terminal T2 affiche alors, en plus du numéro et du nom du terminal appelant T2, les noms des utilisateurs des terminaux T3 à T6, qu'il a mémorisés au moment où le terminal T2 s'est associé au réseau Bluetooth constitué par les terminaux T3 à T6. L'utilisateur du terminal T2 voit ainsi, sur l'écran de son terminal, la liste des noms de ses collègues utilisateurs des terminaux T3 à T6 situés dans le voisinage immédiat, une liaison Bluetooth ayant une portée très courte, de l'ordre de dix mètres.

L'interface graphique du terminal T2 permet de sélectionner un nom dans cette liste, par exemple l'utilisateur du terminal T2 sélectionne le nom de l'utilisateur du terminal T3. D'autre part, l'interface graphique du terminal T2 affiche, en face du nom sélectionné, des boutons de commande permettant de requérir des services tels que transfert de l'appel en cours, ou mise en conférence à trois, en utilisant de manière automatique le numéro du terminal correspondant au nom sélectionné

Au cours de la conversation, l'utilisateur du terminal T1 pose une question à laquelle l'utilisateur du terminal T2 ne sait pas répondre. L'utilisateur du terminal T2 décide de consulter un de ses collègues parmi ceux dont le nom est affiché par son terminal T2. Par exemple, il choisit le nom d'un collègue qui correspond au terminal T3, d'une part parce qu'il pense qu'il sera capable de répondre à cette question, et d'autre part parce qu'il a vu qu'il est effectivement présent à son poste de travail habituel, c'est à dire près du terminal T3. Il décide donc de transférer l'appel vers ce collègue. Pour cela, il sélectionne son nom de ce collègue sur l'écran du terminal T2, puis il sélectionne la commande transfert d'appel, enfin il interrompe la communication quand le transfert a été effectué. Il peut ensuite réutiliser son terminal T2 immédiatement pour une autre communication.

Selon un mode de réalisation préféré, l'interface graphique de chaque terminal T1 à T7 affiche, pendant toute communication en cours, la liste des noms des collègues utilisateurs des terminaux T3 à T6 situés dans le voisinage immédiat du terminal T2 ; et un bouton de commande supplémentaire permettant d'autoriser une autre personne, sélectionnée sur la liste des noms affichée, à intervenir dans la conversation en cours, à sa propre initiative, au lieu de lui imposer un transfert d'appel ou une mise en conférence. Ce bouton commande l'envoi d'un message au terminal de l'autre personne, par exemple T4. Ce message comporte des informations sur la communication en cours: le nom de l'appelant (Utilisateur du terminal T1) et le nom de l'appelé (Utilisateur du terminal T2). Ces informations sont affichées par le terminal T4 de la personne sélectionné, ainsi qu'un bouton de commande lui permettant d'opter pour intervenir ou non dans la communication. S'il décide d'intervenir, il est mis en conférence avec les utilisateurs des terminaux T1 et T2. S'il décide de ne pas intervenir, son refus est transmis au terminal T2 pour que son utilisateur soit informé du refus.

L'utilisateur du terminal T4 peut décider d'intervenir en fonction des informations affichées sur son terminal, mais aussi, dans beaucoup de cas, en fonction d'autres informations qu'il a entendues, car il est situé à une distance de quelques mètres de celui qui a reçu l'appel. Il a donc probablement entendu une partie de la conversation et sait donc le sujet de la communication.

Selon un mode de réalisation préféré, l'interface graphique de chaque terminal T1 à T7 affiche, en l'absence de communication en cours, la liste des noms des collègues utilisateurs des terminaux T3 à T6 situés dans le voisinage immédiat du terminal T2 ; et affiche un bouton de commande supplémentaire permettant de demander l'établissement d'une communication (en l'absence de toute communication déjà établie) avec la personne dont le nom est sélectionné sur la liste affichée, au lieu d'utiliser un répertoire classique. Ce bouton commande l'envoi d'un message au serveur de d'applications AS, ce message comportant des informations sur une communication à établir : le nom de l'appelant (Utilisateur du terminal T2) et le nom de l'appelé (Utilisateur du terminal T3). Ce mode de réalisation permet ainsi de créer automatiquement une sorte de mini répertoire qui ne comporte que les collègues situés à proximité immédiate. C'est utile quand l'utilisateur doit s'éloigner alors qu'il souhaite continuer à parler avec un collègue.

Bien entendu, les terminaux fixes, T1, T3-T7, réalisés selon l'invention, bénéficient des mêmes fonctions que le terminal mobile T2.

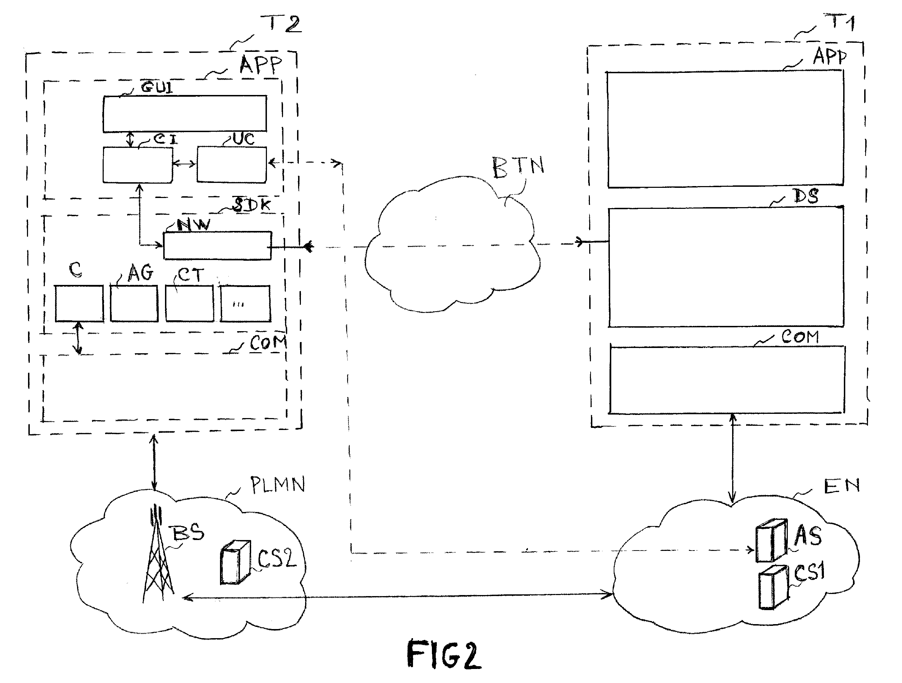

La **figure 2** représente le schéma synoptique d'un exemple de réalisation T2 du terminal selon l'invention, et ses relations avec le terminal T1 qui a un schéma synoptique analogue. Cet exemple de réalisation T2 comporte des moyens logiciels pour réaliser les fonctions suivantes :
- Une application APP comprenant :
   -- une interface graphique GUI qui permet d'afficher des informations lisibles par un utilisateur (Noms des utilisateurs des terminaux qui se sont associés pour former un réseau entre homologues, et commandes qui peuvent être actionnées par l'utilisateur) ; sélectionner un nom ; et saisir des commandes pour faire un transfert d'appel, une mise en conférence, autoriser une intervention dans une communication, pour le terminal correspondant au nom sélectionné ; ou pour demander l'établissement d'une communication téléphonique avec le terminal correspondant au nom sélectionné.
   -- Une unité Cl qui permet de recevoir les contenus des messages Bluetooth provenant des autre terminaux, les authentifier pour vérifier qu'ils viennent de terminaux qui appartiennent à l'entreprise considérée, extraire les numéros de ces terminaux et les noms des utilisateurs contenus dans ces messages, les mémoriser temporairement, transmettre les noms à l'interface graphique GUI pour les afficher sur un écran d'affichage, puis recevoir et interpréter les commandes de l'utilisateur. Elle mémorise aussi le numéro du terminal T2 et le nom de son utilisateur habituel, pour pouvoir les insérer dans un message Bluetooth à émettre à destination des voisins.
- Une unité de commande UC qui permet de commander de manière classique le serveur d'applications AS du réseau d'entreprise EN pour faire un transfert, ou une mise en conférence, ou une demande d'intervention dans une communication, ou une demande d'établissement d'une nouvelle communication, en fonction des commandes interprétées par l'unité CI.
- Une unité SDK comportant :
   -- Un émetteur-récepteur Bluetooth NW, activé en permanence pour rechercher des terminaux voisins, les authentifier, et s'associer automatiquement avec ces voisins, de manière classique, pour constituer un réseau Bluetooth entre homologues, BTN.
   -- Des accès aux autres ressources du terminal : un accès C à une interface de communication pour communiquer avec au moins un réseau autre que le réseau Bluetooth BTN un accès AG vers l'agenda de l'utilisateur (pour programmer une réunion directement liée à l'appel en cours), un accès CT vers la liste de ses contacts (pour ajouter les participants à la conférence dans les contacts), etc.
- Une interface de communication COM, reliée à l'accès C, et permettant de communiquer avec au moins un réseau autre que le réseau Bluetooth BTN. Dans le terminal mobile T2, l'interface COM est une interface radio de type GSM, classique, qui communique avec le réseau d'entreprise EN via le réseau mobile PLMN. Dans le terminal fixe T1, l'interface COM est une interface filaire de type Ethernet, qui communique de manière classique avec le réseau d'entreprise EN via le réseau local Ethernet LAN.

Ces moyens logiciels peuvent être exécutés dans un téléphone fixe, un téléphone sans fil, un téléphone cellulaire, un smartphone, ou un ordinateur personnel exécutant un logiciel de téléphonie.

Dans d'autres modes de réalisation, le réseau entre homologues peut utiliser d'autres technologies, telles que WiFi Direct (Réseau radio WiFi sans infrastructure), ou IRDA (Transmission dans l'infrarouge sans infrastructure).

La mise en oeuvre de l'invention ne nécessite pas de modification dans les serveurs de communication et les serveurs d'application du réseau d'entreprise, ni ceux des réseaux publiques, fixe et mobile.

## Revendications

1. Terminal téléphonique (T2) comportant :
- des moyens (NW) pour s'associer à un réseau local sans fil (BTN) entre terminaux homologues,
- des moyens (NW, CI, GUI) pour recevoir des noms d'utilisateur et des numéros d'appel transmis respectivement par les terminaux homologues associés à ce réseau local sans fil (BTN) entre terminaux homologues,
et étant **caractérisé en ce qu'**il comporte en outre :
- des moyens (GUI) pour permettre à un utilisateur de sélectionner un nom parmi ceux affichés,
- et des moyens (CI) pour permettre à un utilisateur de faire intervenir, dans une communication, le terminal correspondant au nom sélectionné.

2. Terminal téléphonique selon la revendication 1, **caractérisé en ce que** les moyens (CI) pour permettre à un utilisateur de faire intervenir, dans une communication, le terminal (T3) correspondant au nom sélectionné, comportent des moyens (CI) pour envoyer, à ce terminal (T3) correspondant au le nom sélectionné, des informations concernant une communication en cours entre ce terminal (T2) et un troisième terminal (T1) ; et pour autoriser l'utilisateur de ce terminal (T3) correspondant au nom sélectionné à intervenir dans cette communication, à son initiative.

3. Terminal téléphonique selon la revendication 1, **caractérisé en ce que** les moyens (CI) pour permettre à un utilisateur de faire intervenir, dans une communication, le terminal (T3) correspondant au nom sélectionné comportent des moyens (GUI, CI) pour permettre à l'utilisateur de commander le transfert d'une communication téléphonique en cours vers ce terminal (T3) correspondant au nom sélectionné.

4. Terminal téléphonique selon la revendication 1, **caractérisé en ce que** les moyens (CI) pour permettre à un utilisateur de faire intervenir, dans une communication, le terminal (T3) correspondant au nom sélectionné comportent des moyens (GUI, NW) pour permettre à l'utilisateur de commander l'établissement d'une conférence en rajoutant le terminal (T3) correspondant au nom sélectionné à une communication en cours entre le premier terminal (T2) et un troisième terminal (T1).

5. Terminal téléphonique selon La revendication 1, **caractérisé en ce que** les moyens (CI) pour permettre à un utilisateur de faire intervenir, dans une communication, le terminal (T3) correspondant au nom sélectionné comportent des moyens pour demander l'établissement d'une nouvelle communication avec le terminal (T3) correspondant au nom sélectionné.

6. Terminal téléphonique selon la revendication 1, **caractérisé en ce qu'**il comporte en outre des moyens (C1, NW) pour envoyer à un autre terminal, un numéro permettant d'appeler ce premier terminal, et un nom d'utilisateur correspondant à ce premier terminal, lorsque ce premier terminal a été associé à un réseau local sans fil (BTN) créé entre terminaux homologues et comportant cet autre terminal.
